## Europäisches Patentamt
## European Patent Office
## Office européen des brevets

(19)

(11) **EP 1 063 759 A1**

(12) **EUROPÄISCHE PATENTANMELDUNG**

(43) Veröffentlichungstag:
   **27.12.2000   Patentblatt 2000/52**

(51) Int Cl.⁷: **H02M 3/338**

(21) Anmeldenummer: **00201919.8**

(22) Anmeldetag: **30.05.2000**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(30) Priorität: **04.06.1999   DE 19925490**

(71) Anmelder:
   • **Philips Corporate Intellectual Property GmbH**
     **52064 Aachen (DE)**
     Benannte Vertragsstaaten:
     **DE**
   • **Koninklijke Philips Electronics N.V.**
     **5621 BA Eindhoven (NL)**
     Benannte Vertragsstaaten:
     **FR GB**

(72) Erfinder:
   • **Sauerländer, Georg, Philips Corporate IP GmbH**
     **52064 Aachen (DE)**
   • **Raets, Hubert Caspar,**
     **Philips Corporate IP GmbH**
     **52064 Aachen (DE)**
   • **Dürbaum, Thomas, Dr.,**
     **Philips Corporate IP GmbH**
     **52064 Aachen (DE)**

(74) Vertreter: **Gössmann, Klemens**
     **Philips Corporate Intellectual Property GmbH,**
     **Habsburgerallee 11**
     **52064 Aachen (DE)**

(54) **Konverter mit Resonanzkreiselementen**

(57)   Die Erfindung betrifft ein Konverter mit Schaltelementen zum Zerhacken einer Gleichspannung, wobei Einschaltphasen der Schaltelemente im Wechsel aufeinanderfolgen, und mit einem die zerhackte Gleichspannung verarbeitenden und zur Lieferung einer Ausgangsspannung dienenden Schaltungsgebilde mit Resonanzkreiselementen.

Um einen solchen Konverter so zu verbessern, dass ZVS-Betrieb in einem erweiterten Konverterbetriebsbereich mit möglichst kostengünstigen Konvertermodifikationen sichergestellt werden kann, wird vorgeschlagen, dass eine automatische Adaption der Länge der Totzeitphasen, die jeweils zwischen zwei aufeinanderfolgenden Einschaltphasen liegen und während deren die Schaltelemente ausgeschaltet sind, vorgesehen ist, so dass insbesondere die beim Einschalten der Schaltelemente auftretenden Schaltverluste minimiert werden können.

FIG. 2

EP 1 063 759 A1

## Beschreibung

Die Erfindung betrifft einen Konverter mit Schaltelementen zum Zerhacken einer Gleichspannung, wobei Einschaltphasen der Schaltelemente im Wechsel aufeinanderfolgen, und mit einem die zerhackte Gleichspannung verarbeitenden und zur Lieferung einer Ausgangsspannung dienenden Schaltungsgebilde mit Resonanzkreiselementen.

Derartige Konverter stellen vorzugsweise Schaltnetzteile dar, die zur Gleichspannungsversorgung einer am Ausgang des Schaltnetzteils angeschlossenen Last dienen. Bei solchen Schaltnetzteilen wird zunächst eine eingangsseitig anliegende Wechselspannung gleichgerichtet, um eine Konvertereingangsgleichspannung zu erhalten. Die Erfindung soll sich aber auch auf Konverter beziehen, denen eingangsseitig eine Gleichspannung unmittelbar aus einer Gleichspannungsquelle zugeführt wird. Die Eingangsgleichspannung wird mittels einer aus Schaltelementen bestehenden Brückenschaltung zerhackt. Die zerhackte Gleichspannung wird einem Schaltungsgebilde mit Resonanzkreiselementen, d.h. mit induktiven und kapazitiven Blindwiderstandsanteilen zugeführt, so dass in das Schaltungsgebilde ein näherungsweise sinusförmiger Wechselstrom fließt. Mindestens ein induktives und mindestens ein kapazitives Resonanzkreiselement müssen vorhanden sein. Ausgangsseitig des Schaltungsgebildes und damit ausgangsseitig des Konverters kann eine Last angeschlossen werden. Durch Anpassung der Schaltfrequenz wird eine Anpassung an Laständerungen und Eingangsspannungsschwankungen vorgenommen. Konverter mit Resonanzkreiselementen, d.h. resonante Konverter, ermöglichen den Betrieb mit hohen Schaltfrequenzen der Schaltelemente und damit die Realisierung von im Vergleich zur möglichen Leistungsabgabe relativ kleinvolumigen und leichten Geräten. Bei der Verwendung resonanter Konverter wird insbesondere auch ein sogenannter ZVS-Betrieb (Zero Voltage Switching) mit geringem Schaltungsaufwand ermöglicht. ZVS-Betrieb bedeutet hier das Einschalten der Schaltelemente (Überführen in den leitenden Zustand) bei möglichst kleiner Schaltelementspannung, vorzugsweise im Nahbereich von Null Volt. Im ZVS-Betrieb hat das Schaltungsgebilde mit den Resonanzkreiselementen eine von der Seite der Schaltelemente aus betrachtet induktive Eingangsimpedanz. Im Fall eines ZVS-Betriebs werden üblicherweise MOSFET-Transistoren als Schaltelemente verwendet.

Um ZVS-Betrieb zu ermöglichen, müssen Totzeitphasen vorgesehen werden, in denen alle Konverterschaltelemente ausgeschaltet (d.h. im nicht leitenden Zustand) sind. Die Länge der Totzeitphasen wird bekanntermaßen auf die verschiedenen Anwendungsfälle angepasst (siehe z.B. STR-Z4000 Serie der Firma Allegro-Sanken gemäß Datenblatt datiert mit November 1995 oder der Controller-IC MC 34067 von Motorola gemäß Datenblatt aus 1996 - beide ICs dienen zur Schaltelementsteuerung). Bei dem IC der Firma Allegro-Sanken geschieht dies beispielsweise mittels eines externen Widerstands, beim IC von Motorola durch Festlegung einer Widerstands-Kondensator-Kombination. Allerdings kann mit Hilfe der bekannten Ansätze ZVS-Betrieb bei den gegebenen Konverterstrukturen nur für beschränkte Betriebsbereiche garantiert werden. Außerhalb dieser Betriebsbereiche, z.B. bei großen zu verarbeitenden Eingangsspannungsunterschieden oder großen Lastunterschieden, sind essentielle Modifikationen des Konverters erforderlich, so dass insbesondere dessen Herstellungskosten in unerwünscht hohem Maße steigen. Bei einer Fehlanpassung der Totzeitphasen und einem daraus resultierendem Verlassen des ZVS-Betriebs erhöhen sich die Schaltverluste, was im Extremfall zu einer Zerstörung der Schaltelemente führen kann.

Der Erfindung liegt nun die Aufgabe zugrunde, den Konverter der eingangs genannten Art so zu verbessern, dass ZVS-Betrieb in einem erweiterten Konverterbetriebsbereich mit möglichst kostengünstigen Konvertermodifikationen sichergestellt werden kann.

Die Aufgabe wird dadurch gelöst, dass eine automatische Adaption der Länge der Totzeitphasen, die jeweils zwischen zwei aufeinanderfolgenden Einschaltphasen liegen und während deren die Schaltelemente ausgeschaltet sind, vorgesehen ist.

Der erfindungsgemäße Konverter ermöglicht einen ZVS-Betrieb in einem erweiterten Betriebsbereich. Beim Einschalten der Schaltelemente auftretenden Schaltverluste können minimiert werden. Außerdem lässt er sich mit geringem Aufwand auf verschiedene Anwendungen anpassen. Weiterhin ermöglicht die Erfindung eine einfache Konverteranpassung bei Änderungen der zu liefernden Ausgangsleistung, bei der Umstellung auf andere Schaltelementtypen (z.B. auf einen anderen MOSFET-Transistortyp mit anderen parasitären Kapazitäten) oder bei Verwendung anderer Konverterbauelemente oder einer Änderung von Toleranzbereichen bei den verwendeten Konverterbauelementen. Die erforderliche Totzeitanpassung kann durch eine geeignete und leicht zu realisierende Anpassung der zur Steuerung der Schaltelemente verwendeten Steuerschaltungen, d.h. insbesondere durch geeignet programmierte ICs erreicht werden. Der Konverterausgang liefert insbesondere eine auf einen festen Wert geregelte Gleichspannung. Möglich ist aber auch der Einsatz des Konverters zur Lieferung eines konstanten Gleichstromes. Grundsätzlich könnte der Konverter auch eine Wechselspannung oder einen Wechselstrom liefern; für diesen Fall wäre keine Gleichrichteranordnung am Ausgang des Konverters erforderlich.

Zur Realisierung der automatischen Adaption der Länge der Totzeitphasen werden insbesondere zwei Ausführungsvarianten vorgeschlagen. Bei einer ersten Ausführungsvariante ist eine erste Messvorrichtung zum Messen einer über einem der Schaltelemente abfallenden Spannung vorgesehen und eine erste Vergleichsvorrichtung dient zur Erzeugung eines ein Einschalten des Schaltelements bewirkenden Vergleichssignals, wenn die Schaltelementspannung während einer Totzeitphase einen ersten Schwellwert erreicht. Bei der zweiten Ausführungsvariante ist eine zweite Messvorrichtung vorgesehen, die zur Messung der zeitlichen Änderung einer über einem der Schaltelemente abfallenden Spannung dient, und es ist eine zweite Vergleichsvorrichtung vorgesehen ist, die beim Fallen der zeitlichen Änderung der Schaltelementspannung während einer Totzeitphase unter einen zweiten Schwellwert ein Vergleichssignal erzeugt, das ein Einschalten des Schaltelements bewirkt.

Die erste Ausführungsvariante erfordert eine aufwendigere Messvorrichtung als die zweite Ausführungsvariante. Dem steht gegenüber, dass bei der ersten Ausführungsvariante eine präziser zu realisierende Adaption der Länge der Totzeitphasen als bei der zweiten Ausführungsvariante möglich ist.

In einer weiteren Ausgestaltung des erfindungsgemäßen Konverters ist ein Zeitgeber vorgesehen, der zur Vorgabe der Maximallänge der Totzeitphasen dient. Dies stellt eine zusätzliche Sicherungsmaßnahme dar, die auch im Fall von Fehlanpassungen ein Überschreiten einer Maximallänge der Totzeitphasen verhindert.

Die Erfindung bezieht sich auch auf eine insbesondere als integrierter Schaltkreis (IC) ausgeführte Steuerschaltung zur Steuerung mindestens eines der Schaltelemente des erfindungsgemäßen Konverters, wobei die Steuerschaltung zur Lieferung von Steuersignalen vorgesehen ist, die eine automatische Adaption der Länge der Totzeitphasen, die jeweils zwischen zwei aufeinanderfolgenden Einschaltphasen liegen und während deren die Schaltelemente ausgeschaltet sind, bewirken.

Ausführungsbeispiele der Erfindung werden nachstehend anhand der Zeichnungen näher erläutert. Es zeigen:

 Fig. 1 ein Blockschaltbild für eine Schaltungsanordnung mit einem resonanten Konverter,
 Fig. 2 die Schaltungsstruktur eines erfindungsgemäßen resonanten Konverters,
 Fig. 3 Zeitverläufe bei korrekt eingestellter Länge der Totzeitphasen,
 Fig. 4 Zeitverläufe mit zu lang eingestellten Totzeitphasen,
 Fig. 5 Zeitverläufe für den Fall, dass die in den Resonanzkreiselementen gespeicherte Energie nicht die optimale Mindestmenge erreicht,
 Fig. 6 Zeitverläufe bei zu klein eingestellter Länge der Totzeitphasen und
 Fig. 7 ein Blockschaltbild einer Steuerschaltungsanordnung zur Schaltelementsteuerung.

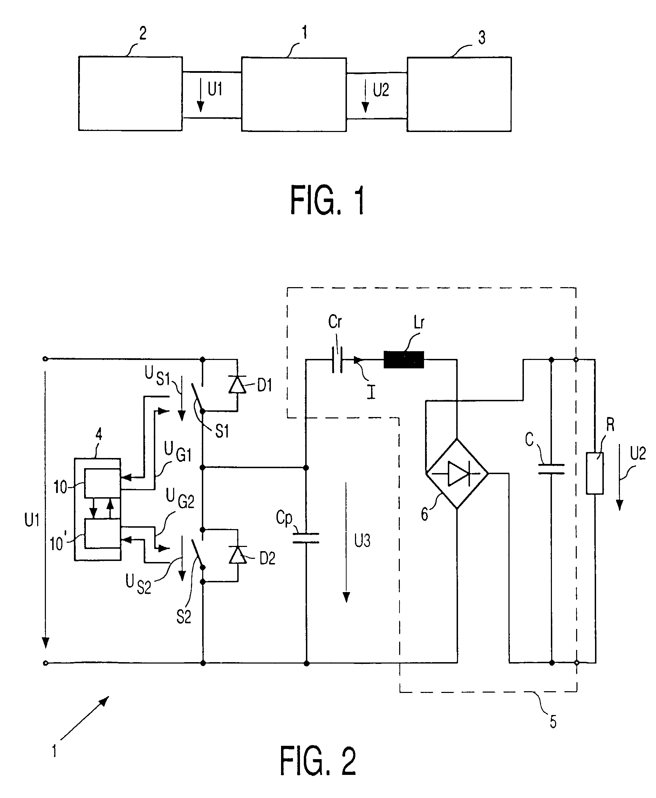

Das in Fig. 1 gezeigte Blockschaltbild zeigt einen resonanten Konverter - hier ein Schaltnetzteil - mit einem Schaltungsblock 1 zum Umsetzen einer Eingangsgleichspannung U1 in eine Ausgangsspannung U2 - hier eine Gleichspannung -, die zur Versorgung einer durch einen Block 3 dargestellten Last dient. Die Eingangsspannung U1 wird hier in der bei Schaltnetzteilen üblichen Weise durch Gleichrichtung einer Wechselspannung eines Wechselspannungsnetzes erzeugt.

Fig. 2 zeigt in detaillierter Weise die wesentlichen Elemente des Konverters nach Fig. 1. Die Eingangsgleichspannung U1 liegt hier an einer Halbbrücke aus in Reihe geschalteten Schaltelementen S1 und S2 an, die die Gleichspannung U1 zerhacken. Die Schaltelemente S1 und S2 sind im vorliegenden Fall MOSFET-Transistoren, die sogenannte Body-Dioden D1 und D2 aufweisen, die jeweils als antiparallel zum entsprechenden Schaltelement S1 beziehungsweise S2 liegende Diode dargestellt sind. Die Schaltelemente S1 und S2 werden von einer Steuereinheit 4 gesteuert, die hierzu auch die an den Schaltelementen S1 und S2 abfallenden Spannungen $U_{S1}$ und $U_{S2}$ misst und auswertet. Für jedes Schaltelement enthält die Steuereinheit 4 jeweils eine eigene Steuerschaltung, wobei eine erste Steuerschaltung 10 zur Steuerung des Schaltelements S1 und eine zweite Steuerschaltung 10' zur Steuerung des Schaltelements S2 dient. Die Steuereinheit 4 kann einerseits zusammen mit den Steuerschaltungen 10 und 10' auf einem einzigen integrierten Schaltkreis (IC) realisiert werden. Die Steuerschaltungen 10 und 10' können aber ebenso mittels separater ICs realisiert werden. Mit Hilfe der Steuereinheit 4 bzw. der Steuerschaltungen 10 und 10' wird die erfindungsgemäße automatische Adaption der Länge von Totzeitphasen sichergestellt, was im folgenden noch näher erläutert wird.

Parallel zum Schaltelement S2 ist eine Kapazität Cp eingezeichnet, an der beim Betrieb des Konverters 1 eine zerhackte Gleichspannung U3 abfällt. Die Kapazität Cp fasst insbesondere die parasitären Kapazitäten der Schaltelemente S1 und S2 zusammen, wenn diese - wie im vorliegenden Ausführungsbeispiel - als MOSFET-Transistoren realisiert sind. Die Kapazität Cp kann aber auch noch weitere zusätzliche Kondensatoren erfassen. Die zerhackte Gleichspannung U3 wird einem Schaltungsgebilde 5 zugeführt, das Resonanzkreiselemente enthält und eine Ausgangsgleichspannung U2 erzeugt. Als Resonanzkreiselemente enthält das Schaltungsgebilde 5 im vorliegenden Fall eine Kapazität Cr und eine Induktivität Lr, die in Reihe geschaltet sind. Zwischen der Reihenschaltung aus der Kapazität Cr und der Induktivität Lr und der Kapazität Cp liegt in Richtung des Konverterausgangs eine Gleichrichteranordnung 6, die einen durch die Resonanzkreiselemente Cr und Lr fließenden Strom I gleichrichtet und wie üblich eine ausgangsseitig angeordnete Glättungskapazität C zuführt, an der die Ausgangsgleichspannung U2 abgreifbar ist. In Fig. 2 liegt die Ausgangsgleichspannung U2 an einer Last R an, die hier als ohmscher Widerstand dargestellt ist. Grundsätzlich könnte der Konverter 1 aber auch zur Lieferung einer Wechselspannung anstelle einer Gleichspannung dienen. In einem solchen Fall wäre eine Gleichrichtung durch eine Gleichrichteranordnung und einen Glättungskondensator nicht erforderlich und die Ausgangsspannung wäre gleich der in der Ausführungsform nach Fig. 2 an der Gleichrichteranordnung 6 abfallenden Wechselspannung.

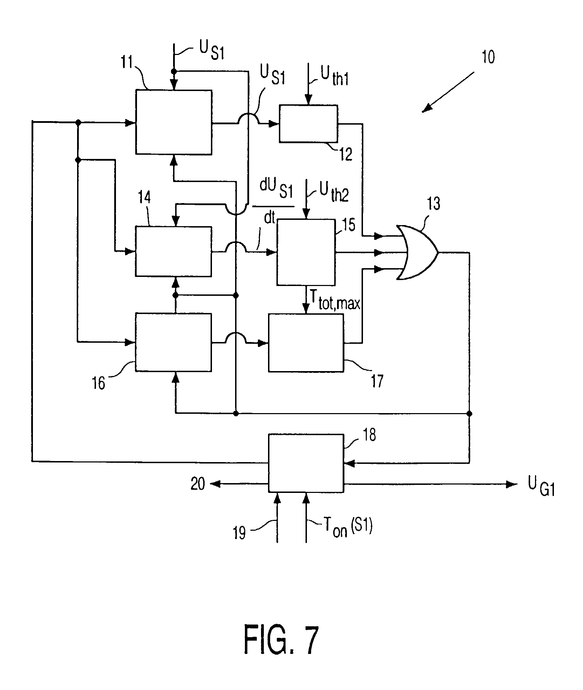

Die Eingangsgleichspannung U1 wird durch abwechselndes Einschalten (Überführen in den leitenden Zustand) und Ausschalten (Überführen in den sperrenden Zustand) der Schaltelemente S1 und S2 in die zerhackte Gleichspannung U3 umgesetzt. Ist der Schalter S1 eingeschaltet, so ist der Schalter S2 ausgeschaltet. Ist der Schalter S2 eingeschaltet, so ist der Schalter S 1 ausgeschaltet. Zwischen dem Ende einer Einschaltphase des Schalters S1 und dem Beginn einer Einschaltphase S2 liegt jeweils eine Totzeitphase, in der beide Schaltelemente S1 und S2 ausgeschaltet sind. Zwischen einem Ende einer Einschaltphase des Schaltelementes S2 und dem Beginn der nachfolgenden Einschaltphase des Schaltelementes S1 liegt ebenfalls eine solche Totzeitphase. Durch Vorsehen solcher Totzeitphasen wird ein ZVS-Betrieb (ZeroVoltage Switching) ermöglicht. Die Länge der Einschalt- und Ausschaltphasen der Schaltelemente S1 und S2 wird dabei mit Hilfe der Steuereinheit 4 eingestellt, was anhand von Fig. 7 später noch näher erläutert wird. Durch Anpassung der Schaltfrequenz wird eine konstante Ausgangsspannung auch bei Lastschwankungen und Schwankungen der Eingangsspannung sichergestellt.

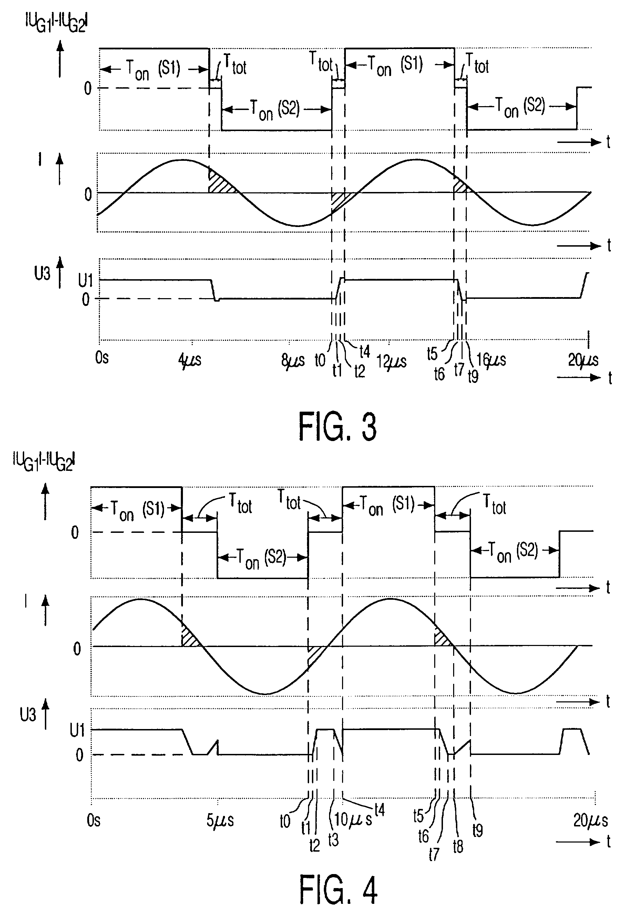

Fig. 3 zeigt Zeitverläufe mit korrekt eingestellter Länge der Totzeitphasen. Das obere der drei Diagramme beschreibt die Differenz $|U_{G1}|$- $|U_{G2}|$ des Betrages der am Schaltelement S1 anliegenden Steuerspannung $U_{G1}$ und des Betrages der am Schaltelement S2 anliegenden Steuerspannung $U_{G2}$. Die als Steuersignal zur Steuerung der Schaltelemente S1 und S2 dienenden Steuerspannungen stellen entsprechende Gate-Spannungen der MOSFET-Transistoren dar. Ist die aufgetragene Differenz der Beträge der Steuerspannungen gleich Null, liegt eine Totzeitphase vor, die jeweils mit $T_{tot}$ bezeichnet ist. Ist durch Anlegen einer geeigneten Steuerspannung $U_{G1}$ an den Steuereingang des Schaltelements S1 dieses in seinen eingeschalteten Zustand versetzt, liegen die mit $T_{on}$ (S1) bezeichneten Zeiträume vor. In diesen Zeiträumen ist die Steuerspannung $U_{G2}$ gleich Null und damit das Schaltelement S2 ausgeschaltet. Die Zeiträume, in denen das Schaltelement S2 eingeschaltet ist, und sich das Schaltelement S1 im ausgeschalteten Zustand befindet, sind mit $T_{on}$ (S2) bezeichnet. Während dieser Zeiträume wird dem Steuereingang des Schaltelements S2 eine von Null verschiedene und das Einschalten des Schaltelements S2 bewirkende Steuerspannung $U_{G2}$ zugeführt. Innerhalb dieser Zeiträume ist die Steuerspannung $U_{G1}$ gleich Null. Das mittlere Diagramm in Fig. 3 zeigt den Zeitverlauf des durch die Resonanzkreiselemente Cr und Lr fließenden Stroms. Schließlich ist im unteren Diagramm von Fig. 3 der Zeitverlauf, der an der parasitären Kapazität Cp anliegenden Spannung U3 dargestellt. Die Zeitachsen der drei Diagramme mit der aufgetragenen Zeit t haben alle den gleichen Maßstab.

Im folgenden wird beispielhaft der Wechsel zwischen den Ein- und Ausschaltzuständen der Schaltelemente S1 und S2 erläutert, an denen die Vorgänge beim Wechsel zwischen den einzelnen Schaltzyklen verdeutlicht werden. Zum Zeitpunkt t0 wird die Steuerspannung $U_{G2}$ auf Null gesetzt, um ein Ausschalten des Schaltelements S2 zu bewirken. Dies führt zu einem Entladevorgang an der Gate-Elektrode des zur Realisierung des Schaltelementes S1 dienenden MOSFET-Transistors. Bis zum Abschluss dieses Entladevorganges ist das Schaltelement S2 allerdings noch leitend, so dass der zu diesem Zeitpunkt negative Strom 1 noch durch das Schaltelement S2 fließt. Ab dem Zeitpunkt t1 ist das Schaltelement S2 schließlich ausgeschaltet, so dass durch dieses kein Strom mehr fließen kann. Der aufgrund der in der Induktivität Lr gespeicherten Energie weiterfließende Strom 1 bewirkt nun ab dem Zeitpunkt t1 ein Aufladen der Kapazität Cp und damit ein Ansteigen der Spannung U3. Zum Zeitpunkt t2 hat die Spannung U3 schließlich den Wert der Eingangsgleichspannung U1 erreicht, so dass die Diode D1 zu leiten beginnt. Ab diesem Zeitpunkt ist ein Einschalten des Schaltelementes S1 unter einer Schaltelementspannung $U_{S1}$ von nahezu 0 Volt (ZVS bei der Diodendurchlassspannung) sichergestellt. Kurze Zeit nach dem Zeitpunkt t2 - zum Zeitpunkt t4 - wird das Schaltelement S1 durch Anlegen einer entsprechenden Steuerspannung $U_{G2}$ eingeschaltet. Damit ist ein Zeitraum $T_{on}$ (S1) mit eingeschaltetem Schaltelement S1 und ausgeschaltetem Schaltelement S2 eingeleitet.

Zum Zeitpunkt t5 wird die Beendigung dieses Zeitraumes $T_{on}$ (S1) eingeleitet, indem die Steuerspannung $U_{G1}$ auf Null gesetzt wird. Dies führt wiederum zu einem Entladevorgang an der Gate-Elektrode des zur Realisierung des Schaltelements S1 dienenden MOSFET-Transistors. Zum Zeitpunkt t6 ist dieser Entladevorgang soweit abgeschlossen, dass das Schaltelement S1 zu sperren beginnt, das heißt in den ausgeschalteten Zustand übergeht, so dass der zu diesem Zeitpunkt positive Strom I zum Entladen der Kapazität Cp und damit zum Abfallen der Spannung U3 führt. Zum Zeitpunkt t7 hat die Spannung U3 den Wert Null erreicht, so dass ab diesem Zeitpunkt die Diode D2 zu leiten beginnt und das Schaltelement S2 unter einer Schalterspannung $U_{S2}$ von nahezu 0 Volt (bei der Diodendurchlassspannung) eingeschaltet werden kann, was kurze Zeit später nach dem Anlegen einer entsprechenden Steuerspannung $U_{G2}$ zum Zeitpunkt t9 auch geschieht. Ab diesem Zeitpunkt beginnt ein Zeitraum $T_{on}$ (S2), in dem das Schaltelement S2 eingeschaltet und das Schaltelement S1 ausgeschaltet ist.

Sowohl zwischen den Zeitpunkten t0 und t4 als auch zwischen den Zeitpunkten t5 und t9 liegt jeweils eine sogenannte Totzeitphase vor, während der jeweils sowohl die Steuerspannung $U_{G1}$ als auch die Steuerspannung $U_{G2}$ gleich Null sind und somit als Ausschaltsteuersignale wirkende Steuerspannungen vorliegen. Die Totzeitphasen $T_{tot}$ sind hier so eingestellt, dass ein ZVS-Betrieb möglich ist. Im I(t)-Diagramm stellen die schraffierten Flächen ein Maß für die zur Verfügung stehende Energie zum Umladen der Kapazität Cp dar (wie ebenfalls in den Fig. 4 bis 6). Im in Fig. 3 dargestellten Fall ist die zur Verfügung stehende Energie im ausreichenden Maße vorhanden.

In Fig. 4 sind Zeitverläufe für den Fall zu langer Totzeitphasen dargestellt. Hier setzt zum zwischen den Zeitpunkten t2 und t4 liegenden Zeitpunkt t3 aufgrund der Vorzeichenumkehr des Stromes I ein unerwünschter Abfall der Spannung U3 ein, die bis zum Zeitpunkt t2 auf den Wert der Eingangsgleichspannung U1 angestiegen war. Dies führt dazu, dass die Diode D1 sich beim Einschalten des Schaltelementes S1 zum Zeitpunkt t4 nicht im leitenden Zustand befindet, so dass das Einschalten des Schaltelementes S1 nicht spannungslos beziehungsweise bei sehr kleiner Spannung erfolgt, sondern bei erhöhter Schaltelementspannung $U_{S1}$ durchgeführt wird. Entsprechendes gilt für den Zeitpunkt t8, wo auch ein unerwünschtes erneutes Umladen der Kapazität Cp (d.h. hier ein Ansteigen der Spannung U3) erfolgt. Auch das Einschalten des Schaltelements S2 zum Zeitpunkt t9 erfolgt damit nicht spannungslos (genauer bei der kleinen Durchlassspannung der Diode D2). Bei dem in Fig. 4 dargestellten Betriebsfall mit zu groß eingestellter Totzeit $T_{tot}$ ergeben sich Schaltverluste, die zu erhöhter Wärmeentwicklung und gegebenenfalls zur Zerstörung der Schaltelemente S1 und S2 führen können.

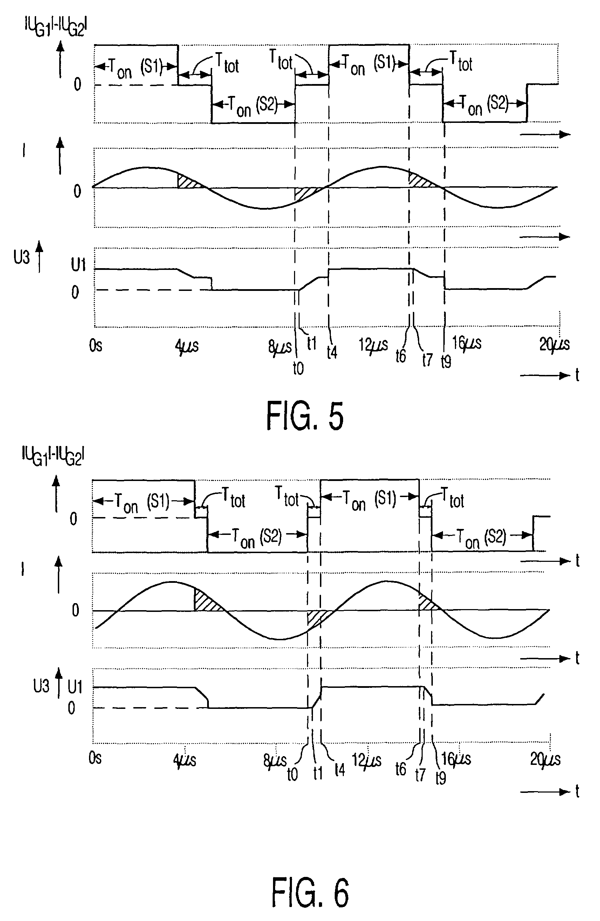

Fig. 5 zeigt einen Betriebsfall, bei dem die in der Induktivität Lr gespeicherte Energie (die schraffiert dargestellten Flächen im I(t)-Diagramm stellen hierfür ein Maß dar) nicht groß genug ist, um die Kapazität Cp zwischen den Zeitpunkten t1 und t4 beziehungsweise t7 und t9 soweit umzuladen, dass die Spannung U3 zum Zeitpunkt t4 auf den Wert der Eingangsgleichspannung U1 angehoben beziehungsweise bis zum Zeitpunkt t9 auf den Wert Null abgesenkt worden ist. In diesem Betriebsfall ist ein Einschalten der Schaltelemente S1 und S2 unter erhöhter Schaltelementspannungen $U_{S1}$ und $U_{S2}$ unvermeidlich. Hier wird man vorzugsweise das Schaltelement S1 am Ende einer Totzeitphase $T_{tot}$ dann einschalten, wenn die zeitliche Änderung (der Differenzenquotient) der Spannung U3 einen Schwellwert (vorzugsweise den Wert Null) erreicht. Entsprechendes gilt für den Zeitpunkt des Einschaltens des Schaltelementes S2 (Zeitpunkt t9). Auch hier wird am Ende der vorausgehenden Totzeit $T_{tot}$ das Schaltelement S2 dann eingeschaltet, wenn die Änderung (der Differenzenquotient) der abfallenden Spannung U3 einen Schwellwert (vorzugsweise den Schwellwert Null) erreicht. Auf diese Weise werden auch in diesem ungünstigen Betriebsfall die Schaltverluste auf ein Minimum reduziert.

Schließlich zeigt Fig. 6 einen Betriebsfall, bei dem die Länge der Totzeitphasen $T_{tot}$ zu klein eingestellt ist. In diesem Fall ist jeweils am Ende einer Totzeitphase das erforderliche Umladen der Kapazität Cp noch nicht vollständig abgeschlossen, d.h. beim Einschalten des Schaltelementes S (Zeitpunkt t4) ist die Spannung U3 noch nicht auf den Wert der Eingangsgleichspannung U1 angestiegen und beim Einschalten des Schaltelementes S2 (Zeitpunkt t9) ist die Spannung U3 noch nicht soweit gesunken, dass die Diode D2 leitet. In dem in Fig. 6 gezeigten Fall werden die Schaltelemente S1 und S2 unter Schaltelementspannungen $U_{S1}$ beziehungsweise $U_{S2}$ eingeschaltet, die bei ausreichend langen Totzeitphasen kleiner sein könnten. Deshalb werden in dem Betriebsfall gemäß Fig. 6 vermeidbare Schaltverluste generiert.

Fig. 7 zeigt die Grundstruktur der zur Steuerung des Schaltelementes S1 dienenden Steuerschaltung 10 als Blockschaltbild. Ein Funktionsblock 11 fasst eine Mess- und Auswertevorrichtung zusammen, die während der Totzeitphasen $T_{tot}$, die unmittelbar vor den Einschaltphasen $T_{tot}$ (S1) des Schaltelementes S1 liegen, die gemessene Spannung $U_{S1}$ oder ein zu dieser Spannung äquivalentes Signal an eine Vergleichsvorrichtung 12 weitergibt, die dieses zugeführte Signal mit einem ersten Schwellwert $U_{th1}$ vergleicht. Beim Erreichen des ersten Schwellwertes wird ein einer logischen "Eins" entsprechendes Setzsignal an ein ODER-Gatter 13 gegeben.

Die Steuerschaltung 10 weist weiterhin durch einen Funktionsblock 14 zusammengefasste Schaltungsteile auf, die während der den Einschaltphasen $T_{on}$ (S1) unmittelbar vorausgehenden Totzeitphasen $T_{tot}$ vorliegenden Differenzenquotienten der Schaltelementspannung $U_{S1}$ bestimmt und diesen einer zweiten Vergleichsvorrichtung 15 zuführt, die den Differenzenquotienten $dU_{S1}/dt$ mit einem zweiten Schwellwert $U_{th2}$ vergleicht. Beim Erreichen des zweiten Schwellwertes $U_{th2}$ wird einer logischen "Eins" entsprechendes Setzsignal an das ODER-Gatter 13 gegeben.

Darüber hinaus enthält die Steuerschaltung 10 noch einen Zeitgeber 16, der jeweils zu Beginn einer Totzeitphase $T_{tot}$, die einer Einschaltphase $T_{on}$ (S1) unmittelbar vorausgeht, startet und ein entsprechendes Zeitsignal an eine Vergleichsvorrichtung 17 gibt, die dieses zugeführte Zeitsignal mit einer vorgebbaren maximal zulässigen Totzeitphasenlänge $T_{tot,max}$ vergleicht. Beim Erreichen dieser maximalen Totzeitphasenlänge liefert die Vergleichsvorrichtung 17 ein einer logischen "Eins" entsprechendes Setzsignal an das ODER-Gatter 13.

Liefert der Ausgang des ODER-Gatters 13 eine logische "Eins", bewirkt dies die Einleitung einer Einschaltphase $T_{on}$ (S1) beziehungsweise das Ende der entsprechenden vorausgehenden Totzeitphase $T_{tot}$. Liegt am Ausgangs des ODER-Gatters 13 eine logische "Eins" an, wird der Zeitgeber 16 zurückgesetzt und durch einen Funktionsblock 18 zusammengefasste Schaltungsmittel bewirken für eine vorgebbare Ein-

schaltzeit $T_{on}$ (S1) die Abgabe eines als Einschaltsignal wirkenden Steuersignals $U_{G1}$ an den Steuereingang des Schaltelementes S1. Weiterhin fasst der Funktionsblock 18 Schaltungsmittel zusammen, die nach dem Ende einer Einschaltphase $T_{on}$ (S2) die Mess- und Auswertevorrichtungen in den Funktionsblöcken 11 und 14 und den Zeitgeber 16 aktiviert. Ein entsprechendes Aktivierungssignal, das als Enable-Signal für die Mess- und Auswertevorrichtungen der Funktionsblöcke 11 und 14 und als Trigger-Signal des Zeitgebers 16 dient, wird zu diesem Zeitpunkt von dem Funktionsblock 18 jeweils an die Funktionsblöcke 11, 14 bzw. 16 gegeben. Dies geschieht zu dem Zeitpunkt, zu dem am Ende einer Einschaltphase $T_{on}$ (S2) dem Funktionsblock 18 ein Signal 19 zugeführt wird, das von einer wie die Steuerschaltung 10 aufgebauten zweiten Steuerschaltung 10', die zur Steuerung des Schaltelementes S2 dient, erzeugt wird. Dementsprechend erzeugt auch der Funktionsblock 18 bzw. die Steuerschaltung 10 ein entsprechendes Signal 20 am Ende einer Einschaltphase $T_{on}$ (S1) an die korrespondierende zweite Steuerschaltung 10'.

**Patentansprüche**

1. Konverter mit Schaltelementen (S1, S2) zum Zerhacken einer Gleichspannung (U1), wobei Einschaltphasen der Schaltelemente (S1, S2) im Wechsel aufeinanderfolgen, und mit einem die zerhackte Gleichspannung (U3) verarbeitenden und zur Lieferung einer Ausgangsspannung (U2) dienenden Schaltungsgebilde (5) mit Resonanzkreiselementen (Cr, Lr),
dadurch gekennzeichnet,
dass eine automatische Adaption der Länge von Totzeitphasen ($T_{tot}$), die jeweils zwischen zwei aufeinanderfolgenden Einschaltphasen liegen und während deren die Schaltelemente (S1, S2) ausgeschaltet sind, vorgesehen ist.

2. Konverter nach Anspruch 1,
dadurch gekennzeichnet,

dass eine erste Messvorrichtung zum Messen einer über einem der Schaltelemente (S1, S2) abfallenden Spannung vorgesehen ist und dass eine erste Vergleichsvorrichtung (12) vorgesehen ist, die ein ein Einschalten des Schaltelements (S1, S2) bewirkendes Vergleichssignal erzeugt, wenn die Schaltelementspannung während einer Totzeitphase ($T_{tot}$) einen ersten Schwellwert ($U_{th1}$) erreicht.

3. Konverter nach Anspruch 1 oder 2,
dadurch gekennzeichnet,

dass eine zweite Messvorrichtung vorgesehen ist, die zur Messung der zeitlichen Änderung einer über einem der Schaltelemente (S1, S2) abfallenden Spannung dient, und dass eine zweite Vergleichsvorrichtung (15) vorgesehen ist, die beim Fallen der zeitlichen Änderung der Schaltelementspannung während einer Totzeitphase ($T_{tot}$) unter einen zweiten Schwellwert ($U_{th2}$) ein Vergleichssignal erzeugt, das ein Einschalten des Schaltelements (S1, S2) bewirkt.

4. Konverter nach einem der Ansprüche 2 oder 3,
dadurch gekennzeichnet,
dass ein Zeitgeber (16) vorgesehen ist, der zur Vorgabe der Maximallänge der Totzeitphasen ($T_{tot}$) dient.

5. Steuerschaltung, insbesondere integrierter Schaltkreis, zur Steuerung mindestens eines der Schaltelemente (S1, S2) eines Konverters nach einem der Ansprüche 1 bis 4.

FIG. 1

FIG. 2

FIG. 3

FIG. 4

FIG. 5

FIG. 6

FIG. 7

EP 1 063 759 A1

| Europäisches Patentamt | **EUROPÄISCHER RECHERCHENBERICHT** | Nummer der Anmeldung EP 00 20 1919 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | GB 2 306 062 A (INTERNATIONAL RECTIFIER CORPORATION) 23. April 1997 (1997-04-23) * Seite 8, Zeile 8 - Seite 16, Zeile 13; Abbildungen 1-6 * | 1,4,5 | H02M3/338 |
| X | EP 0 758 160 A (SONY) 12. Februar 1997 (1997-02-12) * Spalte 6, Zeile 35 - Spalte 11, Zeile 8; Abbildungen 9-12 * | 1-3 | |
| X | EP 0 726 696 A (GENERAL ELECTRIC) 14. August 1996 (1996-08-14) * Spalte 3, Zeile 25 - Spalte 8, Zeile 11; Abbildungen 1-6 * | 1 | |
| X | US 5 053 937 A (BLÖCKL) 1. Oktober 1991 (1991-10-01) * Spalte 6, Zeile 22 - Spalte 16, Zeile 42; Abbildungen 1-4 * | 1 | |
| A | DE 196 04 341 A (FRAUENHOFFER-GESELLSCHAFT) 14. August 1997 (1997-08-14) * Spalte 2, Zeile 53 - Spalte 6, Zeile 21; Abbildungen 1-3 * | 1-3,5 | RECHERCHIERTE SACHGEBIETE (Int.Cl.7) H02M |
| A | EP 0 409 328 A (PHILIPS) 23. Januar 1991 (1991-01-23) * Spalte 3, Zeile 54 - Spalte 8, Zeile 41; Abbildungen 1,2 * | 1,3,5 | |

Der vorliegende Recherchenbericht wurde für alle Patentansprüche erstellt

| Recherchenort MÜNCHEN | Abschlußdatum der Recherche 31. Oktober 2000 | Prüfer Calarasanu, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 00 20 1919

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-10-2000

| Im Recherchenbericht angeführtes Patentdokument | | Datum der Veröffentlichung | Mitglied(er) der Patentfamilie | | Datum der Veröffentlichung |
|---|---|---|---|---|---|
| GB 2306062 | A | 23-04-1997 | DE | 19639873 A | 12-06-1997 |
| | | | FR | 2741757 A | 30-05-1997 |
| | | | IT | MI961997 A | 30-03-1998 |
| | | | JP | 9172786 A | 30-06-1997 |
| | | | SG | 48474 A | 17-04-1998 |
| | | | US | 6002213 A | 14-12-1999 |
| EP 758160 | A | 12-02-1997 | JP | 9056151 A | 25-02-1997 |
| | | | US | 5761055 A | 02-06-1998 |
| EP 726696 | A | 14-08-1996 | US | 5488269 A | 30-01-1996 |
| | | | CN | 1135155 A | 06-11-1996 |
| | | | JP | 8336235 A | 17-12-1996 |
| US 5053937 | A | 01-10-1991 | EP | 0422274 A | 17-04-1991 |
| DE 19604341 | A | 14-08-1997 | WO | 9729537 A | 14-08-1997 |
| EP 409328 | A | 23-01-1991 | GB | 2234642 A | 06-02-1991 |
| | | | DE | 69019784 D | 06-07-1995 |
| | | | DE | 69019784 T | 11-01-1996 |
| | | | JP | 3070478 A | 26-03-1991 |
| | | | KR | 143557 B | 17-08-1998 |
| | | | US | 5068571 A | 26-11-1991 |

EPO FORM P0461

Für nähere Einzelheiten zu diesem Anhang : siehe Amtsblatt des Europäischen Patentamts, Nr.12/82